# EUROPÄISCHE PATENTSCHRIFT

(11) **EP 2 358 567 B1**
(45) Veröffentlichungstag und Bekanntmachung des Hinweises auf die Patenterteilung: **25.02.2015**
(21) Anmeldenummer: 09765023.8
(22) Anmeldetag: 24.11.2009
(51) Int. Cl.: B60R 19/03, B60R 19/18

(54) **STOSSFÄNGERANORDNUNG MIT SPRITZGUSSABSORBER**
BUMPERASSEMBLY WITH ABSORBER MADE BY INJECTION MOULDING
AGENCEMENT DE PARE-CHOCS AVEC ABSORBEUR MOULÉ PAR INJECTION

(30) Priorität: 18.12.2008 DE 102008063538
(43) Veröffentlichungstag der Anmeldung: 24.08.2011
(73) Patentinhaber: SMP Deutschland GmbH, 79268 Bötzingen (DE)
(72) Erfinder: RINDERLIN, Jürgen, 79279 Vörstetten (DE); SCHULER, Marco, 79106 Freiburg (DE)
(74) Vertreter: Patentanwälte Westphal, Mussgnug & Partner
(86) Internationale Anmeldenummer: PCT/EP2009/008325
(87) Internationale Veröffentlichungsnummer: WO 2010/069454

(56) Entgegenhaltungen:
- EP-A1- 1 564 079
- EP-A2- 1 826 069
- DE-A1- 10 329 419
- DE-A1- 10 340 263
- DE-A1- 10 352 629
- DE-A1-102005 020 730

## Beschreibung

Die vorliegende Erfindung betrifft eine Stoßfängeranordnung für Kraftfahrzeuge mit einem in einem Hohlraum zwischen einem Stoßfänger und einem Stoßfängerquerträger angeordneten energieabsorbierenden Element.

Energieabsorbierende Strukturen im Bereich der Stoßfängeranordnung werden immer mehr dazu eingesetzt, um neben dem Schutz der dahinterliegenden Bauteile vor allem den Schutz für Fußgänger zu verbessern. Dazu werden üblicherweise in dem Hohlraum zwischen dem meist schalenförmig aufgebauten Stoßfänger und dem Stoßfängerquerträger energieabsorbierende Elemente oder energieabsorbierende Strukturen integriert, die dazu dienen, die bei einem Zusammenprall mit einem Fußgänger im Bereich des Beinabschnitts auftretende Stoßenergie soweit wie möglich zu absorbieren und damit das Verletzungsrisiko für den Fußgänger zu minimieren.

Zum größten Teil wird heute beim Fußgängerschutz im Bereich des Beinaufschlags zwischen Stoßfänger und Biegeträger ein Kunststoffpolymerschaum als energieabsorbierendes Element eingesetzt, indem in den Zwischenraum zwischen Biegeträger und Stoßfänger ein Schaum in Form von Schaumteilen oder Schaumblöcken eingelagert wird.

So beschreibt die DE 100 42 560 B4 eine Tragestruktur eines Kraftfahrzeugs mit einem Frontend, das zweischalig ausgebildet ist, mit einem äußerem bei relativ wenig Krafteinwirkung verformbaren Frontendschalenteil (Stoßfänger) und einem inneren relativ steifen Frontendschalenteil (Stoßfängerquerträger), wobei zwischen dem Stoßfängerquerträger und dem Stoßfänger ein Deformationsformteil angeordnet ist, das eine Schaumstruktur aufweist.

In der EP 1 577 168 A1 werden Stoßfänger als energieabsorbierende Bauteile beschrieben, die als blasgeformte Hohlkörper ausgebildet sind, die eine Schaumstofffüllung beidseitig umschließen.

Die Verwendung von Schaum als energieabsorbierendes Mittel hat zwar den Vorteil, dass der Schaum leicht ist und kostengünstig eingesetzt werden kann, allerdings benötigt der Schaum relativ viel Bauraum und hat den zusätzlichen Nachteil, dass der Schaum im Falle eines Zusammenpralls nicht zu 100% reversibel ist, was bedeutet, dass das energieabsorbierende Mittel nach jedem Zusammenstoß seinen Wirkungsgrad verliert.

Alternativ wurden daher auch andere energieabsorbierende System erprobt. So wird in der DE 10 2005 020 730 A1 ein Stoßfängersystem für Kraftfahrzeuge beschrieben, bei dem zwischen dem Stoßfängerquerträger und dem Stoßfänger Formationselemente in Form von Hohlprofilabschnitten zur Energieabsorption angeordnet sind. Die DE 198 61 026 A1 beschreibt energieabsorbierende Stoßfänger von Kraftfahrzeugen mit Energieabsorbern, die zwischen Stoßfänger und Stoßfängerquerträger angeordnet sind, wobei die Energieabsorber Versteifungselemente enthalten, die von einer an dem Stoßfängerquerträger befestigbaren rückseitigen Haltestruktur wegweisende freistehende Vorderseiten (Rippen) aufweisen und sich unabhängig voneinander unter Energieaufnahme verformen können. Der Nachteil dieser beiden oben genannten Systeme zur Energieabsorption für den Fußgängerbeinschutz besteht darin, dass die energieabsorbierenden Elemente so konzipiert sind, dass sie sich bei einem Zusammenprall mit einem Fußgänger irreversibel verformen, wofür die oben geschilderten energieabsorbierenden Strukturen relativ viel Bauraum benötigen.

Aus der DE 44 01 874 C1 ist ein zwischen einer Stoßfängerhülle und einem Stoßfängerquerträger eines Kraftfahrzeuges einlegbares Dämpfungselement bekannt, das über eine aus zwei Federschenkeln und einem die Federschenkel verbindenden Steg bildende Rippenstruktur aus einer sich in Längsrichtung des Stoßfängerquerträgers erstreckenden Längsrippe sowie über eine Anzahl von rechtwinklig zu der Längsrippe ausgerichteten Querrippen verfügt. Diese gitterartige Rippenstruktur verfügt über eine insbesondere bei hohen Kollisionsgeschwindigkeiten elastische Verformbarkeit, allerdings ist die Energieaufnahme bei Kollisionen mit verhältnismäßig geringen Geschwindigkeiten nicht sehr groß und die Struktur verhält sich relativ starr, so dass diese Anordnung als Fußgängerschutz nicht besonders geeignet ist.

In der EP 1 564 079 A1 wird ein Stoßfängerabsorber für den Fußgängerschutz beschrieben, der als W-förmiges Schaumteil zwischen Stoßfängerquerträger und Stoßfängerhülle angeordnet ist. Auch diese Anordnung hat den Nachteil, dass relativ viel Bauraum benötigt wird, um einen wirksamen Fußgängerschutz zu realisieren. Hinzu kommt, dass das Bauteil selber relativ kompliziert aufgebaut ist, was die Fertigungskosten negativ beeinflusst.

Allgemein besteht das Problem, dass die energieabsorbierenden Systeme für den Fußgängerschutz im Bereich des Stoßfängers immer relativ viel Bauraum benötigen, vgl. EP 1 826 069 A2, die dem Oberbegriff des Anspruchs 1 der vorliegenden Erfindung entspricht. Ein wirksamer Schutz des Fußgängers kann nämlich nur dann gewährleistet werden, wenn ausreichend Platz für eine Deformation des Absorbers zur Verfügung steht.

Gleichzeitig hat der Konstrukteur eines Fahrzeugs jedoch immer das Bestreben, Bauraum einzusparen und zu reduzieren, da auf Grund der hohen gesetzlichen Anforderungen in Bezug auf Insassenschutz und Sicherheit sowie der hohen Ausstattungserwartungen der Endverbraucher die Bauräume, insbesondere im Frontendbereich eines Kraftfahrzeugs immer knapper werden.

Um Überhangslängen eines Fahrzeuges zu vermeiden, Designvorgaben einzuhalten und dabei auch den Verbrauch der direkt von der Länge des Fahrzeuges bzw. dem Gewicht des Fahrzeugs abhängt, in Grenzen zu halten, ohne dabei auf Funktionalität und Qualität verzichten zu müssen, sind die Konstrukteure gezwungen, zusätzlichen Bauraum durch technische Lösungen zu gewinnen.

Aufgrund der Blocklänge der für den Fußgängerschutz eingesetzten Schäume bzw. der Deformationswege der sonstigen Absorptionselemente ist jedoch mit den derzeit auf dem Markt angebotenen Konzepten für einen Fußgängerschutz eine weitere Reduzierung des Bauraums im Frontbereich des Fahrzeugs nicht möglich, ohne dass dabei die Sicherheit für die Fußgänger reduziert wird und die gesetzlichen Vorgaben bezüglich der Energieabsorption für den Fall eines Zusammenpralls mit einem Fußgänger nicht mehr erfüllbar sind.

Es besteht somit weiterhin das Problem, eine Stoßfängeranordnung zur Verfügung zu stellen, die beiden Anforderungen (effizienter Fußgängerschutz und Bauraumeinsparung) gerecht wird und die Nachteile des Standes der Technik nicht aufweist.

Gelöst wird das Problem durch eine Stoßfängeranordnung mit den Merkmalen des Anspruchs 1. Vorteilhafte Weiterentwicklungen und Ausgestaltungen der Erfindung sind Gegenstand der Unteransprüche.

Es wurde gefunden, dass mit Hilfe eine Spritzgussabsorbers, der in einem Hohlraum zwischen Stoßfänger und Stoßfängerquerträger angeordnet ist, die gesetzlichen Grenzwerte für den Fußgängerschutz beim Beinaufschlag eingehalten werden können und gleichzeitig der erforderliche Bauraum für den Fußgängerschutz auf ein Minimum reduziert werden kann. Erreicht wird dies durch einen Spritzgussabsorber, der einerseits als energieabsorbierendes Element und andererseits als energieumlenkendes Element zumindest über die gesamte Breite des Fahrzeugs für den Fußgängerschutz in dem Hohlraum zwischen Stoßfänger und Stoßfängerquerträger angeordnet ist.

Dabei besitzt der Spritzgussabsorber die Grundform eines Dreiecks, dessen Schenkel entweder mit dem Querträger oder mit dem Stoßfänger fest verbunden sind. Die feste Verbindung des Spritzgussabsorbers erstreckt sich ebenfalls über gesamte Breite des Prüfbereichs, d.h. des Fahrzeugs. Die Spitze des Dreiecks ist in Form einer Nase ausgebildet und zeigt, je nachdem an welchem Bauteil der Spritzgussabsorber befestigt ist, entweder in Richtung des Stoßfängers und somit in Richtung des Fußgängers oder bei einer Befestigung am Stoßfänger selber in Richtung des Querträgers.

Dabei ist die Spitze des Dreiecks bzw. die Nase des Spritzgussabsorbers für den Fall des Fußgängeraufpralls als Drehpunkt ausgebildet, an dem im Falle des Fußgängeraufpralls ein Großteil der Energie abgelenkt wird, in dem der Fußgänger selber in Richtung des freien Raums über der Kühlerhaube gelenkt wird. Auf diese Weise kann die noch durch den Spritzgussabsorber zu absorbierende Energie auf ein Minimum reduziert werden, was sich dann in einem entsprechend geringeren Bauraumbedarf niederschlägt. Dabei ist der Spritzgussabsorber jedoch keine starre Umlenkung für das Bein des Fußgängers, sondern der Spritzgussabsorber besitzt eine ausreichend weiche Struktur, dass während des Umlenkens der Energie ein Teil der Energie durch den Absorber bereits absorbiert wird und damit Verletzungen des Fußgängers durch ein zu starres Element weitgehend vermieden werden und eine Zertrümmerung des Beins ausgeschlossen wird.

Ein weiterer Vorteil dieser Anordnung ist, dass es sich um ein relativ einfaches Bauteil handelt, dessen Fertigungskosten entsprechend gering sind.

Üblicherweise besteht der erfindungsgemäß Spritzgussabsorber aus einem thermoplastischen Kunststoff, wofür vorzugsweise Polypropylen oder Polyamid eingesetzt werden kann. Eine weitere vorteilhafte Ausführungsform sieht vor, dass der thermoplastische Kunststoff zusätzlich durch Glas- oder Kohlefasern und/oder einem Gewebe verstärkt ist. Weiterhin besteht die Möglichkeit, anstatt eines thermoplastischen Kunststoffes einen duroplastischen Kunststoff einzusetzen.

Das Deformationsverhalten des Spritzgussabsorbers kann über weite Bereiche dem jeweiligen Fahrzeug optimal angepasst werden, um auf diese Weise den hohen Anforderungen für den Fußgängerschutz zu genügen.

So kann einerseits das Material selber variiert werden, wobei die Wandstärken innerhalb des Spritzgussabsorbers unterschiedlich gestaltet und für jede Position am Spritzgussabsorber individuell bestimmt werden können.

Es können Knickstellen vorgesehen sein, um das Verformungsverhalten des Spritzgussabsorbers zu beeinflussen und die Steifigkeit sowie das Faltverhalten des Absorbers einzustellen.

Darüber hinaus besteht die Möglichkeit, die Höhe des Absorbers in X-Richtung (Fahrtrichtung) zu variieren und somit den Absorberweg und gegebenenfalls auch die Absorbersteifigkeit einzustellen.

Weitere Mittel zur Festlegung des Deformations- bzw. Umlenkverhaltens sind Verstärkungselemente, wie z. B. Rippen, oder Schwächungsmittel, wie z. B. Aussparungen, Löcher oder Bohrungen, mit deren Hilfe ebenfalls wieder die Steifigkeit des Absorbers eingestellt werden kann und die vor allem auch zur Feineinstellung des Deformationsverhaltens dienen.

Einen ganz wesentlichen Einfluss auf den Fußgängerschutz hat bei dem vorliegenden Konzept die Nasenposition, wobei durch Verschiebung der Absorbernase in Z-Richtung (Vertikale) das Drehmoment des Drehpunkts beeinflusst wird und damit die Umlenkung der Aufprallenergie gesteuert wird. Weiterhin kann durch geometrische Veränderungen der Nasenspitze (Ausbildung eines Radius, einer Fläche etc.) einerseits die Steifigkeit des Absorbers beeinflusst werden, aber auch die Schutzwirkung für den Fußgänger optimiert und auch hier wieder das Umlenkverhalten des Spritzgussabsorbers eingestellt werden.

Grundsätzlich ist vorgesehen, dass der Absorber über die gesamte Breite des Prüfbereichs, d.h. des Fahrzeugs (Y-Richtung) sowohl an seinem oberen als auch an seinem unteren Schenkel fest entweder mit dem Stoßfängerquerträger oder dem Stoßfänger verbunden ist. Dabei kann die Verbindung durch Kleben, Schrauben, Clipsen, Klemmen, Nieten oder sonstige Befestigungsformen hergestellt werden.

Da der erfindungsgemäße Spritzgussabsorber ein relativ einfaches Bauteil ist, bietet er gleichzeitig ein hohes Maß an Integrationspotential für die Integration von Zusatzbauteilen, Leitungen, Sensoren oder anderen Zusatzfunktionen. So können im Spritzgussabsorber Kanäle zum Verlegen von Leitungen vorgesehen oder weitere Zusatzfunktionen angespritzt sein.

Zusammenfassend kann festgehalten werden, dass sich im Falle eines Fußgängeraufpralls der Spritzgussabsorber entsprechend seiner besonderen Form verformt und dabei über die Spitze des Dreiecks (Nase des Spritzgussabsorbers) das Bein des zu schützenden Fußgängers abrollt und einen großen Teil der Aufprallenergie umlenkt, während der Absorber die verbleibende Energie durch Deformation absorbiert. Durch die für den jeweiligen Fahrzeugtyp optimale Einstellung der Steifigkeit und des Verformungsverhaltens kann dabei eine Bauraumreduzierung von 15 bis 20% realisiert werden. Ein ausreichender Schutz des Fußgängers wird durch eine für den jeweiligen Fahrzeugtyp entsprechend optimierte Positionierung des Drehpunktes gewährleistet.

Im Folgenden wird die vorliegende Erfindung anhand von Abbildungen ausführlich erläutert. Dabei zeigen
- Fig. 1: einen Querschnitt einer Stoßfängeranordnung,
- Fig. 2: einen Querschnitt einer weiteren Stoßfängeranordnung, und
- Fig. 3: einen Querschnitt des Spritzgussabsorbers.

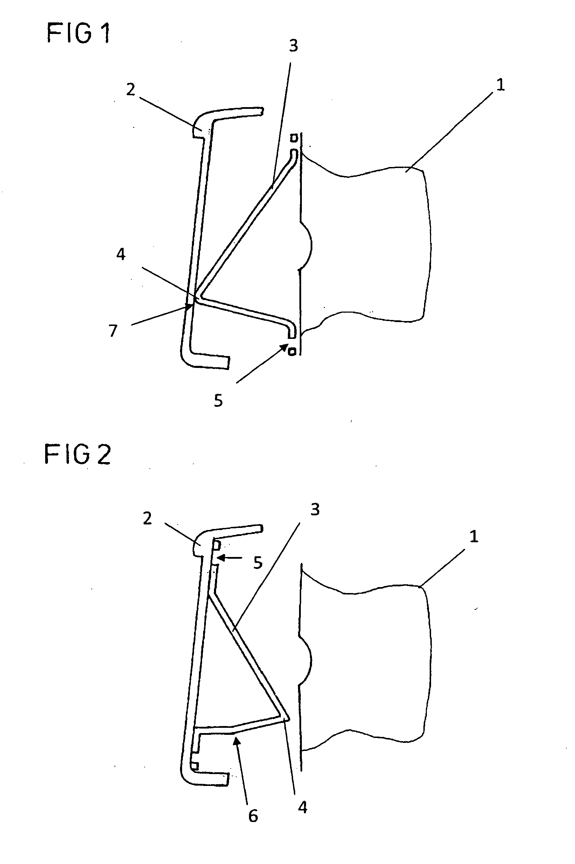

In der Figur 1 ist im Querschnitt eine Stoßfängeranordnung zu sehen, bei der ein Spritzgussabsorber 3 in einem Hohlraum zwischen einem Stoßfänger 2 und einem Stoßfängerquerträger 1 angeordnet ist. Der Spritzgussabsorber 3 ist in Form eines Dreiecks ausgebildet, wobei die Schenkel des Dreiecks fest mit dem Stoßfängerquerträger 1 verbunden sind. Bei der vorliegenden Darstellung ist die Befestigungsform nicht berücksichtigt, sondern es sind lediglich Befestigungsöffnungen 5 vorgesehen, wobei die Befestigung mit Schrauben, Nieten oder sonstigen Befestigungskonzepten vorgenommen werden kann. Die Spitze des Dreiecks ist als Absorbernase 4 ausgebildet, die die Funktion hat, einen Teil der Aufprallenergie des Fußgängers umzulenken, indem das Bein des Fußgängers über die Absorbernase 4 als Drehpunkt abrollt, wobei der Fußgänger in Richtung des freien Raums über der Kühlerhaube gelenkt wird.

Die Figur 2 zeigt ebenfalls im Querschnitt eine Stoßfängeranordnung mit einem zwischen Stoßfängerquerträger 1 und Stoßfänger 2 angeordneten Absorberelement 3, das ebenfalls wieder in Form eines Dreiecks ausgebildet ist. Allerdings ist das Absorberelement 3 in diesem Fall über seine Schenkel mit dem Stoßfänger 1 verbunden, so dass die Nase 4 des Absorberelementes 3 in Richtung Stoßfängerquerträger 1 zeigt. Auch in diesem Fall ist die Absorbernase 4 als Drehpunkt ausgebildet, über den das Bein des Fußgängers abgerollt. Somit hat sich am Funktionsprinzip im Vergleich zu der in Figur 1 dargestellten Ausführungsvariante nichts geändert, sondern es wurde lediglich der Drehpunkt entgegen der Fahrtrichtung nach hinten verschoben. Im Vergleich zwischen Figur 1 und Figur 2 fällt auf, dass die Absorbernase 4 in der Figur 2 spitz ausgestaltet ist und keinen Radius aufweist, der bei dieser Variante nicht unbedingt erforderlich ist, da der Absorber 3 beim Fußgängerinpact direkt auf den Stoßfängerquerträger 1 trifft, wohingegen bei der in Figur 1 dargestellten Variante die Absorbernase 4 im Beinbereich des Fußgängers auftrifft und aus diesen Grunde abgerundet sein muss, um Verletzungen des Fußgängers zu vermeiden und ein gefahrloses Abrollen des Beins zu ermöglichen. Prinzipiell kann die Absorbernase bei der in der Figur 2 dargestellten Variante jede denkbare geometrische Form einnehmen, die ein Umlenken der Aufprallenergie ermöglicht.

Des Weiteren ist in der Figur 2 eine Knickstelle 6 zu erkennen, über die das Deformationsverhalten bzw. die Weichheit des Absorptionselementes 3 eingestellt werden kann.

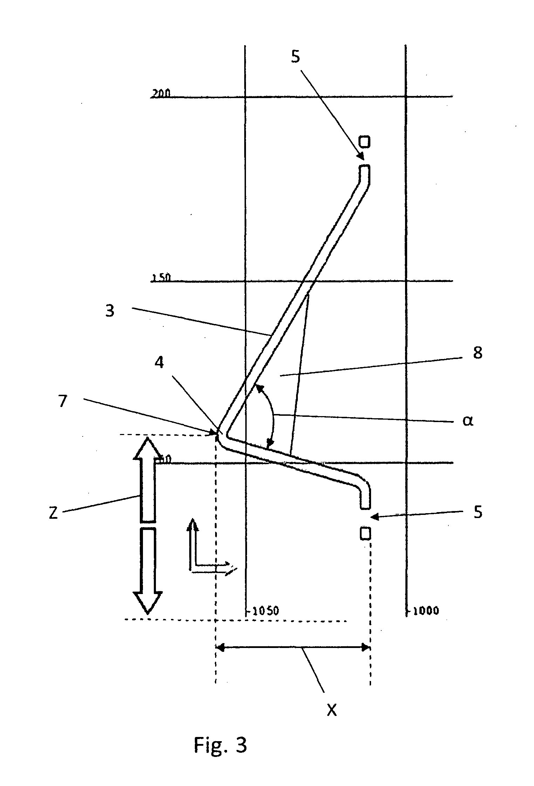

In der Figur 3 ist das Absorptionselement 3 im Querschnitt in Alleinstellung zu sehen. Diese Darstellung dient vor allem dazu, die Variationsmöglichkeiten und Mittel aufzuzeigen, das Deformations- und Umlenkverhalten des Spritzgussabsorbers 3 zu beeinflussen. Als mögliche Variable ist zunächst die Wandstärke des Absorbers 3 zu nennen, mit der vor allem die Steifigkeit des Absorbers 3 beeinflusst wird. Des weiteren kann das Absorptions-, Umlenk- Deformationsverhalten des Absorbers 3 insbesondere durch den Öffnungswinkel α, den Radius 7 der Absorbernase 4, die Absorberhöhe X und die Position Z der Absorbernase, die durch die Position Z in Richtung der Vertikalen definiert ist, beeinflusst werden, wobei das Umlenkverhalten insbesondere durch die Position Z und den Radius 7 eingestellt wird.

Darüber hinaus ist bei dieser Darstellung ein Verstärkungselement 8 zu erkennen, mit dem die Steifigkeit des Absorbers 3 beeinflusst wird. Als weitere Variable wäre noch eine mögliche Knickstelle zu nennen, die bei dieser Darstellung jedoch nicht gezeigt wird. Auch bei dieser Darstellung wurde auf das Befestigungskonzept nicht eingegangen, sondern es sind lediglich die Befestigungslöcher 5 zu erkennen, die in Kombination mit Schrauben, Nieten, Clipsen oder sonstigen Befestigungsvorrichtungen eingesetzt werden.

### Bezugszeichenliste

- 1: Stoßfängerquerträger
- 2: Stoßfänger
- 3: Spritzgussabsorber
- 4: Absorbernase
- 5: Befestigungseinrichtung
- 6: Knickstelle
- 7: Nasenradius
- 8: Verstärkungselement

- X: Absorberhöhe
- Z: Nasenposition
- α: Öffnungswinkel

## Patentansprüche

1. Stoßfängeranordnung für Kraftfahrzeuge mit einem in einem Hohlraum zwischen einem Stoßfänger (2) und einem Stoßfängerquerträger (1) angeordneten energieabsorbierenden Element, wobei das energieabsorbierende Element ein zumindest über die gesamte Breite des Fahrzeugs für den Fußgängerschutz angeordneter Spritzgussabsorber (3) ist,
**dadurch gekennzeichnet, dass**
der Spritzgussabsorber (3) die Grundform eines Dreiecks besitzt, wobei die Schenkel des Dreiecks zumindest über die gesamte Breite des Fahrzeugs für den Fußgängerschutz entweder mit dem Stoßfängerquerträger (1) oder mit dem Stoßfänger (2) fest verbunden sind, während die Spitze des Dreiecks in Form einer Absorbernase (4) in Richtung des Stoßfängers (2) oder des Stoßfängerquerträgers (1) zeigt und als Drehpunkt ausgebildet ist, wobei der Spritzgussabsorber einerseits als energieabsorbierendes Element und andererseits als energieumlenkendes Element in dem Hohlraum zwischen Stoßfänger und Stoßfängerquerträger angeordnet ist.

2. Stoßfängeranordnung nach Anspruch 1,
**dadurch gekennzeichnet, dass**
der Spritzgussabsorber (3) aus einem thermoplastischen oder duroplastischen Kunststoff besteht.

3. Stoßfängeranordnung nach Anspruch 1 oder 2,
**dadurch gekennzeichnet, dass**
der thermoplastische Kunststoff mit einem Gewebe und/oder Glas- oder Kohlefasern verstärkt ist.

4. Stoßfängeranordnung nach einem der Ansprüche 1 bis 3,
**dadurch gekennzeichnet, dass**
der thermoplastische Kunststoff Polypropylen oder Polyamid ist.

5. Stoßfängeranordnung nach einem der Ansprüche 1 bis 4,
**dadurch gekennzeichnet, dass**
der Spritzgussabsorber (3) Mittel zur Einstellung des Deformationsverhaltens aufweist.

6. Stoßfängeranordnung nach einem der Ansprüche 1 bis 5,
**dadurch gekennzeichnet, dass**
die Mittel zur Einstellung des Deformationsverhaltens des Spritzgussabsorbers (3) Wandstärkenveränderungen, Knickstellen (6), Verstärkungsmittel, wie z.B. Rippen (8), und/oder Schwächungen, wie z.B. Löcher oder Bohrungen, umfassen.

## Claims

1. A bumper arrangement for motor vehicles with an energy-absorbing element arranged in a cavity between a bumper (2) and a bumper cross beam (1), wherein the energy-absorbing element is an injection-moulded absorber (3) arranged at least over the entire width of the vehicle for the protection of pedestrians, **characterized in that** the injection-moulded absorber (3) has the basic shape of a triangle, wherein the legs of the triangle are connected in a fixed manner either to the bumper cross beam (1) or to the bumper (2) at least over the entire width of the vehicle for the protection of pedestrians, while the apex of the triangle in the form of an absorber projection (4) points in the direction of the bumper (2) or the bumper cross beam (1) and is designed in the form of a pivot point, wherein the injection-moulded absorber is arranged as an energy-absorbing element on the one hand and as an energy-diverting element on the other hand in the cavity between the bumper and the bumper cross beam.

2. A bumper arrangement according to claim 1, **characterized in that** the injection-moulded absorber (3) consists of a thermoplastic material or thermosetting plastics material.

3. A bumper arrangement according to claim 1 or 2, **characterized in that** the thermoplastic material is reinforced with a fabric and/or glass or carbon fibres.

4. A bumper arrangement according to any one of claims 1 to 3, **characterized in that** the thermoplastic material is polypropylene or polyamide.

5. A bumper arrangement according to any one of claims 1 to 4, **characterized in that** the injection-moulded absorber (3) has means for setting the deformation behaviour.

6. A bumper arrangement according to any one of claims 1 to 5, **characterized in that** the means for setting the deformation behaviour of the injection-moulded absorber (3) comprise changes in the wall thickness, kinks (6), reinforcement means, such as for example ribs (8), and/or weakened portions, such as for example holes or bores.

## Revendications

1. °) Agencement de pare-chocs de véhicule automobile comportant dans la cavité entre un pare-choc (2) et une poutre transversale de pare-choc (1), un élément absorbant l'énergie, cet élément absorbant l'énergie ayant un absorbeur injecté (3) installé au moins sur toute la largeur du véhicule pour la protection des piétons,
**caractérisé en ce que**
- l'absorbeur injecté (3) a la forme de base d'un triangle, dont
- les branches s'étendent au moins sur toute la largeur du véhicule pour la protection des piétons, soit en étant reliées solidairement à la traverse de pare-choc (1), soit avec le pare-choc (2) alors que le sommet du triangle, sous la forme d'un bec absorbant (4), est dirigé dans la direction du pare-choc (2) ou de la traverse de pare-choc (1) et constitue un point de rotation,
- l'absorbeur injecté étant d'une part un élément absorbant l'énergie et d'autre part, un élément déviant l'énergie dans la cavité entre le pare-choc et la traverse de pare-choc.

2. °) Agencement de pare-chocs selon la revendication 1,
**caractérisé en ce que**
l'absorbeur injecté (3) est en une matière thermoplastique ou thermodurcissable.

3. °) Agencement de pare-chocs selon la revendication 1 ou 2,
**caractérisé en ce que**
la matière thermoplastique est renforcée par un tissu et/ou par des fibres de verre ou de carbone.

4. °) Agencement de pare-chocs selon l'une des revendications 1 à 3,
**caractérisé en ce que**
la matière thermoplastique est un polypropylène ou une polyamide.

5. °) Agencement de pare-chocs selon l'une des revendications 1 à 4,
**caractérisé en ce que**
l'absorbeur injecté (3) comporte des moyens pour régler le comportement de déformation.

6. °) Agencement de pare-chocs selon l'une des revendications 1 à 5,
**caractérisé en ce que**
les moyens pour régler le comportement de déformation de l'absorbeur injecté (3) comprennent des variations d'épaisseurs de paroi, des points de pliage (6), des moyens de renforcement tels que par exemple des nervures (8) et/ou des affaiblissements tels que des trous ou des perçages.
